Europäisches Patentamt

European Patent Office

Office européen des brevets

(11) Publication number: **0 243 826**
**A2**

## (12) EUROPEAN PATENT APPLICATION

(21) Application number: **87105717.0**

(22) Date of filing: **16.04.87**

(51) Int. Cl.4: **C05D 9/02** , C05G 1/00 ,
A23K 1/175 , A23K 1/14 ,
A23L 1/304 , A01N 59/00 ,
//A61K33/00

(30) Priority: **22.04.86 DK 1855/86**
**16.03.87 DK 1347/87**

(43) Date of publication of application:
**04.11.87 Bulletin 87/45**

(84) Designated Contracting States:
**AT BE CH DE ES FR GB GR IT LI LU NL SE**

(71) Applicant: **Berthelsen, Viggo**
**Lundely 14**
**dk-2900 Hellerup(DK)**

(72) Inventor: **Berthelsen, Viggo**
**Lundely 14**
**dk-2900 Hellerup(DK)**

(74) Representative: **Patentanwälte Grünecker,**
**Kinkeldey, Stockmair & Partner**
**Maximilianstrasse 58**
**D-8000 München 22(DE)**

(54) **An element-rich composition of vegetable origin.**

(57) A mineral supplement composition based on vegetable material may be prepared by drying and finely grinding a vegetable material from plants grown in soil enriched with elements by the application of ground dolomite, fly ash or crushed lava, or from old trees. The fine powder may be used directly, or it may be leached with water, whereupon insoluble material and water are removed. The soluble substance obtained or the finely divided vegetable material may be used as a supplement to food for humans or animal food-stuffs. It may be supplemented with a salt mixture prepared by treating crushed dolomite with an aqueous solution of an organic acid, removing insoluble components and evaporating the water.

EP 0 243 826 A2

# 0 243 826

## AN ELEMENT-RICH COMPOSITION OF VEGETABLE ORIGIN

The present invention relates to an element-rich material, especially a mineral supplement composition which is based on a vegetable material in finely divided form, optionally in combination with physiologically acceptable salts obtained by treating dolomite with an aqueous solution of an organic acid, removing insoluble material and optionally present volatile liquids, and recovering dissolved salts in solid form by evaporation of the water content. Further, one or more vitamins may be added to the element-rich material. The element-rich material may be used as an additive for animal food-stuffs and as a food supplement for humans.

The vegetable material in finely divided form may be any material deriving from vegetables, fruits, grains, straw, cobs, pomace, shells from pulses, and grape marc, all from plants grown in soil enriched with dolomite, fly ash or crushed lava. The vegetable material may also be derived from old trees.

In the present specification and claims, fly ash means a waste product produced, for example, in power plants which use hard coal in pulverized form of a particle size of, for example, 0-1 mm as fuel. On combustion, these particles leave ash particles of a size most commonly in the range between 0 and 100 $\mu$. The particles constitute the fly ash which is collected on electrostatic filters, and the particles are usually removed from the filters by pumping with air and are collected in closed tanks.

The vegetable material may be used in the finely divided form as obtained by grinding to a particle size as baking flour, optionally after drying, or it may be leached with water, optionally with addition of an acid, such as citric acid, whereupon insoluble material is filtered off, and the mother liquor is evaporated to give a residual solid containing a substantial part of the element spectrum to be found in the vegetable material.

One aspect of the invention is based on the theory that vegetable material of any kind which has grown in soil which has been enriched with dolomite in ground form, fly ash or crushed lava, will absorb the broad spectrum of elements which can be found in small amounts in the said material. Dolomite comprises as main ingredients $CaCO_3$ and $MgCO_3$, but from the living organisms from which dolomite was originally formed, a broad spectrum of elements in trace amounts can be recovered. Like the fuel from which it is formed, fly ash contains a very rich element spectrum comprising a very large number of trace elements. Further, the element spectrum found in the fuel and therefore in corresponding ratios in the fly ash must necessarily reflect and be correlated with the element spectrum in the plants which, hundreds of millions of years before our time, substantially constituted the origin of the solid fuel. As it may be presumed that the element spectrum in fly ash thus substantially corresponds to a mineral spectrum originally formed by plants, the present invention is based on the theory that this spectrum is harmless in quality and quantity, and further has a decidedly favourable influence on the plants and therefore will contribute to improving conditions for the plants with regard to their requirement for macro and micro nutrients. These elements enrich the soil, even though they are present in trace amounts only. Such element-enrichment is very important because many cultivated fields have been depleted of trace elements owing to intensive cultivation and fertilization with high purity fertilizers. When the crops have continuously removed trace elements necessary for their growth, and these trace elements have not been supplied by the modern fertilizers, the soil has become depleted. Therefore, many crops are today insufficient with respect to trace elements. As a supply of dolomite, fly ash or crushed lava to crop areas will re-establish the trace element spectrum in the soil. Therefore, plants grown in enriched soil will be more element-rich and therefore more healthy for the individual eating such vegetable products, than plants grown in depleted soil.

A further aspect of the invention is based on the theory that old trees which are deeply rooted in the soil in layers which have neither been depleted by intensive cultivation, nor been contaminated by pollution, have access to a particularly advantageous element spectrum and, hence, will have the most beneficial element composition for living organisms. Therefore, one aspect of the invention is based on the theory that the element composition of old trees is valuable for other living organisms, including animals and humans.

It is preferred to use old oak, beech, birch and elm trees as well as fruit trees and bushes grown in dolomite-enriched soil as the vegetable material. The material in finely divided form may be prepared by sawing the wood material, drying the resulting saw dust, and grinding the dried saw dust in a mill.

Other vegetable sources are root crops grown in dolomite-enriched soil or soil to which fly ash or crushed lava has been added. As examples of root crops may be mentioned potato, celery, beet root, carrot, beet, sugar beet, etc., celery being especially preferred.

2

Another vegetable source is straw from cereal crops, i.e. corn, wheat, barley, oat, rye, and rice, when the crops have grown in dolomite-enriched soil to which fly ash or crushed lava has been added. The utility of this material which has previously been considered less valuable, may be increased by cutting the straw into lengths of 5-25 mm, drying the chopped material, and grinding the dried straw particles into a particle size like normal baking flour.

Plant products such as vegetables, fruits, grains, cobs, pomace, shells from pulses and grape marc from plants grown in dolomite-enriched soil or soil to which fly ash or crushed lava has been added, may all, if necessary, be dried to a water content of 5-6 percent by weight, optionally after disintegration to a practical size, and thereafter be ground in a suitable mill, e.g. a bead or ball mill or an impact mill, until a particle size like normal baking flour is obtained. In the case of plant material with a high water content, such as fruits, it is advisable to cut the fruit into slices before the initial drying.

The enrichment of the element spectrum occurs in all parts of the plant. This means that also pomace such as shells from, e.g., black currant, and grape marc can be utilized as vegetable material source. In this way a waste material previously to be disposed of may now be used after drying and grinding as explained above.

It is believed, but the invention is not limited to this theory, that the grinding of the material to very small particles makes the essential trace elements accessible to the organisms. This means that the uptake of the essential trace elements is dependent on the particle size of the vegetable material. There are indications to the effect that the uptake of the trace elements occurs to a smaller extent if the vegetable particles are not ground sufficiently finely.

It is a further aspect of the present invention that the finely ground vegetable material, especially straw, from crops grown in dolomite-enriched soil or in soil to which fly ash or crushed lava has been added, is leached with water. Thus, compounds containing the trace elements are transferred into the aqueous layer from which they may be recovered by removal of the water. It is particularly suitable to use the vegetable material and the leaching water, optionally including additives, such as acid, in a ratio of 1:5 to 1:20, more preferably 1:8 to 1:15, most preferably 1:10. The aqueous layer is preferably maintained at an elevated temperature during the leaching, for example at 30-70°C, especially at 50-60°C, for a period of 10-30 hours, especially about 24 hours. After the leaching, insoluble components are removed by filtering, and the mother liquor is evaporated, it is preferred to evaporate at a moderate temperature, for example at 80°C or below, and to carry out the evaporation under vacuum at 60°C or by spray drying. The powdery remanence obtained after removal of the water is a readily soluble powder containing the beneficial trace elements.

Dolomite in ground form, fly ash or crushed lava may be applied to cultivated areas in an amount of 1-6 tons/ha, preferably 2-5 tons/ha, especially 3-4 tons/ha. The application may be carried out at any convenient time, but for fruit trees and bushes it is advantageous to make the application in the autumn. For plants such as cereals and root crops the season for application of dolomite, fly ash or crushed lava is early spring, i.e. just before, after or simultaneously with the sowing. For some crops such as celery or beets, the application of dolomite, fly ash or crushed lava may be carried out when the plants have reached the cotyledon stage. For plants grown in greenhouses, the application may be carried out before sowing or before small plants are planted out in the greenhouse. Greenhouse-cultivated plants are, e.g., tomato, eggplant, cucumber, melon, squash and pumpkin.

The element-rich material prepared from any of the vegetable materials as defined above may be used in a process for the preparation of pharmaceutical compositions in dry form. The pharmacalogically active material is formulated together with a vegetable material of the origin described above and in dried, finely divided form, together with wood flour from old trees in dried, finely divided form, or together with a powder prepared from a vegetable material of the origin described above by leaching with water, filtering and evaporation as described above.

By incorporating the element-rich material as defined above, the activity of any pharmaceutical composition will be improved through the broad element spectrum.

It is presumed that a more sufficient consumption of trace elements will result in increased well-being and have a beneficial influence on the enzyme system in living organisms, including animals and humans. Organisms with a well-functioning enzyme system will be less exposed to diseases associated with enzyme deficiencies.

Accordingly, a further aspect of the invention relates to a method of improving the activity of the enzyme system in animals, including humans, wherein a composition comprising a vegetable material from any plant grown in soil enriched with dolomite, fly ash or crushed lava, or from old trees, in dried, finely divided form, or comprising an element-rich material obtained by leaching of a vegetable material from enriched soil, filtering and evaporation of the water from the mother liquor, is administered to the subject in need of such treatment.

3

The mineral supplement composition according to the invention may be formulated for administration in any convenient way for use in human or veterinary medicine or nutrition, and therefore, the invention comprises within its scope a composition comprising an element-rich material prepared as described above together with a pharmaceutical carrier or excipient, or together with normal food or food-stuff components.

The mineral supplement composition comprising the element-rich material according to the invention may be formulated for administration by oral route. The composition may be in the form of a tablet, a capsule, a powder or granules.

Tablets and capsules for oral administration may be in unit dose form and may contain conventional excipients, such as binding agents, e.g., syrup, acacia, gelatin, sorbitol, tragacanth or polyvinyl-pyrrolidone; fillers, e.g., lactose, sugar, maize starch, calcium phosphate, sorbitol or glycine; tabletting lubricants, e.g., magnesium stearate, talc, polyethylene glycol or silica; disintegrants, e.g., potato starch; or acceptable wetting agents such as sodium lauryl sulphate. The tablets may be coated according to methods well known in the pharmaceutical practice.

There are indications to the effect that the intake of a vegetable material in finely divided form according to the invention improves the staying power of humans and animals. This implies that athletes and, e.g., race-horses will be able to increase their performance. Moreover, there are indications to the effect that the degree of utilization of food-stuffs is improved when a vegetable material in finely divided form according to the invention is administered to animals, such as porkers.

It seems indicated that the favourable spectrum of trace minerals may be passed on from animals to the next step in the food chain, e.g., via milk from cattle which have eaten the material in question. Such milk will be enriched with the broad spectrum of trace elements, and products prepared from such milk would similarly be enriched with respect to trace elements. As products prepared from milk may be mentioned: milk powder, whey powder, cheese, curdled milk products, such as youghurt, etc. There are indications to the effect that humans and animals obtain increased well-being by consuming such a product.

When the composition according to the invention is to be administered together with normal food or food-stuff components, it is preferred to incorporate it in a premix for animal or human food. In addition to the mineral supplement composition, such premix may comprise normal food ingredients such as cereal products, sugar, etc. in the premix, other active ingredients such as vitamins, medicaments, etc., may be incorporated.

The vegetable flour may be used in an amount of about 0.2-1 g/day for an adult of about 75 kg, preferably 0.2-0.6 g/day, such as 0.4 g/day. As a food additive for animals the vegetable flour may be used in the following amounts: for porkers: 1-5 g/day, such as 2-3 g/day; for cattle: 2-5 g/day, such as 2.0 g/day; and for chickens: 0.002-0.01 g/day, such as 0.003-0.007 g/day.

The powder obtained by drying and finely grinding the vegetable material from plants grown in trace element-enriched soil, and the powder obtained by leaching such a vegetable material with water, filtering and evaporation of the filtrate, may be added to food and beverages for humans. The readily soluble powder obtained by evaporation of the filtrate from leaching as described above, may, for example, be added to beverages, for example fruit juice and soda water or concentrates therfor, in an amount of 0.2-1.5 g per liter liquid ready for drinking, or to jams and marmelades in an amount of, for example, 0.2-1 g per kg jam or marmelade. The finely ground powder may be added to delicatessen products and to bread, using an amount of, for example, 0.5-10 g/kg.

In one embodiment of the invention the vegetable material in finely divided form is combined with physiologically acceptable salts which may be obtained by treating dolomite with an aqueous solution of an organic acid (such as citric acid, acetic acid, etc.). By said treatment a broad spectrum of components in the dolomite will be dissolved and will be present in the solution in the form of, e.g., citrates. The salts obtained by treating dolomite with an aqueous solution of an organic acid are prepared in the following manner: Dolomite is crushed and ground to a particle size of less than 0.5 mm. An aqueous solution of an organic acid, such as acetic acid, tartaric acid, citric acid, lactic acid, gluconic acid or ascorbic acid, is poured over the dolomite particles, and the mixture is allowed to stand for a period of 8-40 hours, for example 24 hours. 5-30 l of water per kg of dolomite, especially 10-25 l, particularly 20 l of water per kg of dolomite may be used; and the amount of acid used is 5-40 kg per kg of dolomite, for example 5-30 kg, particularly about 25 kg of acid per kg of dolomite. Stirring may be carried out during the dissolution process, but it is not compulsory beyond the period in which the organic acid is dissolved. The temperature may be maintained at 20-80°C, for example at 30-70°C, especially at 60°C during the leaching process. When the dolomite has been allowed to stand with the mixture of water and acid for the period indicated, insoluble components are removed by filtering, and the mother liquor is evaporated. The evaporation may be carried out by spray drying or by means of a vacuum. The product of the drying process is a readily soluble salt mixture. The salt mixture thus obtained may also be used on its own as a mineral supplement for humans and animals.

When the vegetable material is used in admixture with the salt mixture as defined above, the vegetable material is finely divided, dry form and the salt mixture are used in a weight ratio of 1:50-200, especially 1:75-150, preferably 1:100-125.

It may be advantageous to incorporate sodium and/or potassium salts of organic acids, such as acetic acid, gluconic acid, lactic acid, etc., in order to increase the amount of sodium and potassium ions administered.

Danish patent application No. 252/74 states that the application of an element-rich material, such as fly ash, to cultivated fields results in an increased absorption of elements by the crops. However, until now, no beneficial effects have been confirmed in animals fed with the vegetable material in very small amounts in a very finely divided form, as is the case according to the present invention.

The below examples illustrate the invention in detail:

**EXAMPLE 1**

To a wheat field was applied finely ground dolomite in an amount of 3 tons/ha prior to sowing. When the wheat was ripe, the field was harvested and the wheat threshed. The straw was chopped into a particle size of about 25 mm and dried from a water content of about 16 percent by weight to about 5 percent by weight by means of hot air (60-80°C). The dried straw particles were ground in a bread mill or an ordinary flour mill to a particle size like that of baking flour.

Element analysis of the dried, ground material gave the following results (obtained by PIXE analysis (Proton Induced X-Ray Emission)).

| Element | | mg/kg |
|---|---|---|
| Aluminium | Al | 2226 |
| Antimony | Sb | < 0.3 |
| Arsenic | As | 0.8 |
| Barium | Ba | 136 |
| Lead | Pb | 3.1 |
| Bromine | Br | 2.2 |
| Cadmium | Cd | 0.5 |
| Calcium | Ca | 5300 |
| Chlorine | Cl | 106 |
| Chromium | Cr | < 2.3 |
| Cobalt | Co | < 14 |
| Gallium | Ga | 1.6 |

| | | | |
|---|---|---|---|
| Germanium | Ge | | 0.1 |
| Iron | Fe | | 517 |
| Potassium | K | | 12380 |
| Copper | Cu | | 19 |
| Manganese | Mn | | 114 |
| Molybdenum | Mo | < | 0.7 |
| Nickel | Ni | | 0.5 |
| Niobium | Nb | | 0.1 |
| Phosphorus | P | | 2772 |
| Rubidium | Rb | | 13.8 |
| Selenium | Se | | 0.2 |
| Silicium | Si | | 1797 |
| Strontium | Sr | | 50 |
| Sulfur | S | | 903 |
| Silver | Ag | < | 0.1 |
| Tin | Sn | < | 0.2 |
| Titanium | Ti | | 33 |
| Vanadium | V | < | 35 |
| Yttrium | Y | < | 0.6 |
| Zinc | Zn | | 57 |
| Zirconium | Zr | | 2.6 |

(<: below the detection limit for the analysis method used)

**EXAMPLE 2**

To a barley field was applied about 4 tons/ha of finely ground dolomite. The straw was chopped, dried and ground as described in Example 1 and used as a food supplement. The powder having a particle size like that of baking flour was administered to animals as follows:
To calves: 0.25 g/day
To chickens: 0.005 g/day
To pigs: 0.3 g/day.

**EXAMPLE 3**

A wheat field to which about 3 tons/ha of finely ground dolomite had been applied was harvested just before the ripening when the wheat was still in its green state. The whole crop, i.e. grains and straw, was finely chopped, dried and ground to a fine powder as described in Example 1. The powder having a particle size like that of baking flour was used as food additives in the following amounts:
To cows: 5 g/day

To calves: 0.5 g/day
To chickens: 0.005 g/day
To sows: 5 g/day
To young pigs: 0.3 g/day.

## EXAMPLE 4

To a celery field was applied 4 tons/ha of dolomite. The celery root was rinsed, cut into cubes of about 1 cm³ each, dried in an oven with hot air (60-80°C) until dry and thereafter ground in a flour mill. The fine powder having a particle size like that of baking flour may be used as a food supplement to humans and animals. To an adult of 75 kg 0.25 g may be administered once or twice a day.

Elemental analysis of the dried, ground material gave the following results (obtained by PIXE analysis):

| Element | | | mg/kg |
|---------|----|----|-------|
| Aluminium | Al | | 5377 |
| Antimony | Sb | < | 2.2 |
| Arsenic | As | < | 0.5 |
| Barium | Ba | | 20 |
| Lead | Pb | | 3.4 |
| Bromine | Br | | 39 |
| Cadmium | Cd | | 1.5 |
| Calcium | Ca | | 16237 |
| Chlorine | Cl | | 3579 |
| Chromium | Cr | < | 3.9 |
| Cobalt | Co | < | 8.8 |

| Gallium | Ga | | 5.5 |
|---|---|---|---|
| Germanium | Ge | | 0.2 |
| Iron | Fe | | 221 |
| Potassium | K | | 48364 |
| Copper | Cu | | 13 |
| Manganese | Mn | | 60 |
| Molybdenum | Mo | < | 1.4 |
| Nickel | Ni | | 2.1 |
| Niobium | Nb | < | 0.1 |
| Phosphorus | P | | 2165 |
| Rubidium | Rb | | 15 |
| Selenium | Se | < | 0.2 |
| Silicium | Si | < | 1059 |
| Strontium | Sr | | 103 |
| Sulfur | S | | 7525 |
| Silver | Ag | < | 0.1 |
| Tin | Sn | | 1.2 |
| Titanium | Ti | < | 7.8 |
| Vanadium | V | < | 34 |
| Yttrium | Y | < | 3.4 |
| Zinc | Zn | | 262 |
| Zirconium | Zr | < | 4.5 |

(<: below the detection limit for the analysis method used)

**EXAMPLE 5**

To a field with black-currant bushes was applied 4 tons/ha of pulverized Icelandic lava in the autumn. The black currants were pressed and the shells were dried and ground in a flour mill. The fine powder having a particle size like that of baking flour may be used as a food supplement for humans and animals. To an adult of 75 kg 0.3 g may be administered once or twice a day.

Elemental analysis on a PIXE apparatus gave the following results:

| Element | | mg/kg |
|---|---|---|
| Aluminium | Al | 990 |
| Antimony | Sb | < 0.4 |
| Arsenic | As | < 1.8 |
| Barium | Ba | 4.9 |
| Lead | Pb | 20 |
| Bromine | Br | 0.8 |
| Cadmium | Cd | 0.6 |
| Calcium | Ca | 2388 |
| Chlorine | Cl | 322 |
| Chromium | Cr | 8 |
| Cobalt | Co | < 5 |
| Gallium | Ga | 1.2 |
| Germanium | Ge | < 0.004 |
| Iron | Fe | 176 |
| Potassium | K | 10477 |
| Copper | Cu | 33 |
| Manganese | Mn | 4.9 |
| Molybdenum | Mo | 0.8 |
| Nickel | Ni | 4.3 |
| Niobium | Nb | < 0.01 |
| Phosphorus | P | 2293 |
| Rubidium | Rb | 2.4 |
| Selenium | Se | < 0.02 |
| Silicium | Si | < 283 |
| Strontium | Sr | 13 |
| Sulfur | S | 167 |
| Silver | Ag | < 0.05 |
| Tin | Sn | 1.2 |
| Titanium | Ti | 7.1 |
| Vanadium | V | < 2.1 |
| Yttrium | Y | < 0.9 |
| Zinc | Zn | 42 |

| Zirconium | Zr | | 0.9 |
|---|---|---|---|

(<: below the detection limit for the analysis method used)

**EXAMPLE 6**

To a field with red currant bushes was applied 4 tons/ha of fly ash in the autumn. The red currants were pressed and the shells were dried and ground in a flour mill. The fine powder having a particle size like that of baking flour may be used as a food supplement for humans and animals. To an adult of 75 kg 0.3 g may be administered once or twice a day.

Elemental analysis on a PIXE apparatus gave the following results:

| Element | | | mg/kg |
|---|---|---|---|
| Aluminium | Al | | 990.600 |
| Antimony | Sb | < | 0.411 |
| Arsenic | As | < | 1.821 |
| Barium | Ba | | 4.877 |
| Lead | Pb | | 19.621 |
| Bromine | Br | | 0.815 |
| Cadmium | Cd | | 0.594 |
| Calcium | Ca | | 2388.870 |
| Chlorine | Cl | | 321.945 |
| Chromium | Cr | | 8.458 |
| Cobalt | Co | < | 5.296 |
| Gallium | Ga | | 1.223 |
| Germanium | Ge | < | 0.004 |
| Iron | Fe | | 176.784 |
| Potassium | K | | 10477.500 |
| Copper | Cu | | 33.757 |
| Manganese | Mn | | 4.953 |
| Molybdenum | Mo | | 0.808 |
| Nickel | Ni | | 4.305 |
| Niobium | Nb | < | 0.011 |
| Phosphorus | P | | 2293.620 |

| | | | |
|---|---|---|---|
| Rubidium | Rb | | 2.393 |
| Selenium | Se | < | 0.023 |
| Silicium | Si | < | 283.083 |
| Strontium | Sr | | 12.954 |
| Sulfur | S | | 167.259 |
| Silver | Ag | < | 0.053 |
| Tin | Sn | | 1.185 |
| Titanium | Ti | | 7.125 |
| Vanadium | V | < | 2.156 |
| Yttrium | Y | < | 0.918 |
| Zinc | Zn | | 41.910 |
| Zirconium | Zr | | 0.911 |

(<: below the detection limit for the analysis method used)

## EXAMPLE 7

To a wheat field was applied 4 tons/ha of dolomite immediately prior to sowing. When the wheat was ripe and harvested, the straw was cut into small pieces which were dried and pulverized as described in Example 1.

A kilogram of wheat straw powder was soaked in 10 liters of water, and the mixture was allowed to stand for 24 hours at 60°C without stirring. Then the mixture was filtered, and the clear liquid was evaporated under vacuum at 60°C. A readily soluble powder was obtained.

Elemental analysis on a PIXE apparatus gave the following results:

| Element | | | mg/kg |
|---|---|---|---|
| Aluminium | Al | | 2330.20 |
| Antimony | Sb | < | 0.71 |
| Arsenic | As | | 0.19 |
| Barium | Ba | | 72.59 |
| Lead | Pb | | 0.57 |
| Bromine | Br | | 7.81 |
| Cadmium | Cd | < | 0.37 |

| Calcium | Ca | | 2708.40 |
|---|---|---|---|
| Chlorine | Cl | | 957.70 |
| Chromium | Cr | | 16.53 |
| Gallium | Ga | < | 0.12 |
| Germanium | Ge | < | 0.10 |
| Iron | Fe | | 129.93 |
| Potassium | K | | 12688.00 |
| Copper | Cu | | 9.76 |
| Manganese | Mn | | 274.50 |
| Molybdenum | Mo | | 0.74 |
| Nickel | Ni | | 18.79 |
| Niobium | Nb | < | 0.16 |
| Phosphorus | P | | 1293.20 |
| Rubidium | Rb | | 54.66 |
| Selenium | Se | | 0.09 |
| Silicium | Si | < | 502.64 |
| Strontium | Sr | | 20.80 |
| Sulfur | S | | 364.17 |
| Silver | Ag | < | 0.32 |
| Tin | Sn | < | 0.61 |
| Titanium | Ti | < | 8.54 |
| Vanadium | V | < | 7.56 |
| Yttrium | Y | < | 0.35 |
| Zinc | Zn | | 51.48 |
| Zirconium | Zr | < | 0.92 |

(<: below the detection limit for the analysis method used)

The powder obtained in the manner described above is added in an amount of 0.2-0.7 g to 1 liter of refreshing drink which thus becomes enriched with regard to element spectrum.

Jam and marmelade prepared in a normal manner may be enriched with regard to element spectrum by the addition of 0.2-0.4 g of element-rich powder per kg of ready jam or marmelade.

The prepared powder may further be added to delicatessen products, such as sausages. which thus obtain a richer element spectrum.

**EXAMPLE 8**

A powder is prepared as described in Example 7. Together with wheat starch and magnesium stearate this powder is compressed into tablets having a composition as follows:

| Ingredient | mg/tablet |
|---|---|
| Readily soluble powder | 200 |
| Wheat starch | 200 |
| Magnesium stearate | 50 |
| Ascorbic acid | 50 |
| Total weight | 500 |

**EXAMPLE 9**

Wood and bark from old beech trees (more than 20 years old) were disintegrated by means of a saw, and the saw dust was dried to a water content of about 7-8 percent by weight and ground in a mill. The dry beech powder with its rich mineral spectrum may be used as a food additive for humans and animals, the daily intake for humans being about 0.25-0.5 g.

**EXAMPLE 10**

Wood from old elm and oak trees (i.e. more than 20 years old) and bark from such trees may be used in the same manner as described in Example 9.

**EXAMPLE 11**

To a pear tree field was applied dolomite in an amount of 4 tons/ha in the autumn. Whole pears from the trees grown in dolomite-enriched soil were cut into thin (3-5 mm) slices and dried in hot air (60-80°C). The dried slices were ground in a flour mill to give a fine powder. The fine powder having a particle size like that of baking flour may be used as a food additive for humans and animals.

**EXAMPLE 12**

Saw dust from old beech trees was dried to a water content of about 5 percent by weight. Thereafter, the saw dust was ground in a mill to a particle size like that of baking flour. The resulting wood flour was added to a feed additive salt mixture obtained in the following manner.

1 kg of dolomite and 25 kg of citric acid (technical purity) were soaked with 20 liters of tap water. The mixture was heated to 60-70°C for 24 hours. Solids were filtered off, and the mother liquor was spray-dried. To the resulting powder were added 3.3 g of sodium citrate and 25 g of potassium citrate to yield a feed additive salt mixture.

The dried and ground saw dust was added to the above feed additive salt mixture in a ratio of 3.5 mg of saw dust powder to 450 mg of feed additive salt mixture. The powder mixture was granulated by means of polyvinyl-pyrrolidone and pressed to tablets in a conventional tabletting apparatus. each table weighing 0.50 g.

**EXAMPLE 13**

Saw dust from old beech trees (i.e. more than 20 years old) was dried in a thermostated oven at 60°C until dry (water content below 4 percent by weight) and thereafter ground in a mill to a particle size like that of normal baking flour. The resulting beech flour was added to normal wheat flour in an amount of 0.5 percent by weight and used for baking purposes. The beech flour had no influence on the taste of the bread, but provided the bread with a broad trace mineral content.

**Claims**

1. A mineral supplement composition based on a vegetable material in finely divided form, optionally in combination with physiologically acceptable salts obtained by treating dolomite with an aqueous solution of an organic acid, removing insoluble material and optionally present volatile liquids, and recovering dissolved salts in solid form by evaporation of the water content, and optionally one or more vitamins.

2. A composition as claimed in claim 1,
characterized in that the vegetable material in finely divided form is selected from the group consisting of vegetables, fruits, grains, straw, cobs, pomace, shells from pulses, and grape marc from plants grown in soil enriched with dolomite, fly ash or crushed lava, and wood flour from old trees.

3. A composition as claimed in claim 2,
characterized in that the vegetable material has a particle size like that of baking flour and has been obtained after grinding after optional drying.

4. A composition as claimed in claim 2,
characterized in that the element-rich material has been recovered from the vegetable material by leaching with water, removal of insoluble components and evaporation of the aqueous layer.

5. A composition as claimed in claim 2,
characterized in that the vegetable material is wood flour from old oak, beech, birch or elm trees or from fruit trees and bushes grown in soil enriched with dolomite, fly ash or crushed lava.

6. A composition as claimed in claim 2,
characterized in that the vegetable material is root crops from plants grown in soil enriched with dolomite, fly ash or crushed lava.

7. A food additive for animals or food supplement for humans,
characterized in comprising an element-rich material based on a vegetable material in finely divided form, optionally in combination with physiologically acceptable salts selected from the group consisting of salts obtained by treating dolomite with an aqueous solution of an organic acid, removing insoluble material and optionally present volatile liquids, and recovering dissolved salts in solid form by evaporation of the water content, and optionally one or more vitamins.

8. A food additive,
characterized in comprising a composition according to any of the claims 1-6.